# EUROPEAN PATENT APPLICATION

(11) **EP 1 833 137 A2**
(43) Date of publication of application: **12.09.2007**
(21) Application number: 07103141.3
(22) Date of filing: 27.02.2007
(51) Int. Cl.: H02J 7/00

(54) **Adapter for a power tool battery**

(30) Priority: 10.03.2006 US 373417
(71) Applicant: Black & Decker, Inc., Newark, DE 19711 (US)
(72) Inventor: Watson, James B., Fallston, MD 21047 (US); Ayala, Adan, Baltimore, MD 21212 (US)
(74) Representative: Bell, Ian Stephen

(57) **Abstract**

An adapter electrically connectable to a battery pack, with a first portion for attachment to a power tool, the first portion having a shroud and at least one upwardly-extending terminal pin at least partly surrounded by the shroud, and a second portion for slidably receiving the battery pack, at least one of the second portion and the battery pack having a groove for slidably receiving a rail disposed on the other of the second portion and the battery pack. The center of gravity of the combined battery pack and adapter is disposed at a distance (along the X axis) from the at least one terminal pin of between about 5.6 centimeters and about 26.3 centimeters, and at a distance (along the Y axis) from a top of the shroud of between about 81.0 centimeters and about 83.5 centimeters.

## Description

The present application is a continuation-in-part application of US Appln. No. 29/255,287 [Attorney Docket No. TN10987], filed March 7, 2006, now pending.

This invention relates generally to cordless power tools and more specifically to an adapter for a power tool battery to be used with cordless power tools.

Generally, a cordless power tool includes a tool housing and an electric motor supported by the housing and operable to drive a tool element. A power tool battery is supported by the housing and is electrically connectable to the motor to selectively supply power to the motor.

To charge the battery, a battery charger is provided. Typically, a battery charger includes a charger housing and a charging circuit supported by the charger housing and electrically connectable to a power source. The battery is supported by the charger housing and electrically connected to the charging circuit so that power is selectively supplied to the battery to charge the battery.

There are two types of general configurations for a power tool battery (and for the power tool and the battery charger). The first type is the "tower" battery configuration. In the "tower" configuration, a portion of the tool housing, such as the handle, defines an opening, and the battery includes a "tower" or insertion portion which is inserted into the opening to support the battery on the tool housing and to electrically connect the battery to the motor. To charge the "tower" battery, the charger housing defines a similar opening, and the "tower" portion of the battery is inserted into the opening in the charger housing to support the battery on the charger housing and to electrically connect the battery to the charging circuit.

The second type of battery configuration is the "slide-on" configuration. In the "slide-on" configuration, the tool housing includes a support portion, and the battery slides onto the support portion. The support portion and the battery include inter-engaging connecting structure to physically connect the battery to the tool housing and to electrically connect the battery to the motor. To charge the "slide-on" battery, the charger housing includes a similar support portion, and the battery and the charger housing include similar inter-engaging connecting structure to physically connect the battery to the charger housing and to electrically connect the battery to the charging circuit.

In each general configuration, many different battery constructions (and power tool/battery charger constructions) exist. In each construction, the battery (and the power tool/battery charger) includes a specific connecting structure (size, shape, connectors, position of connectors, etc.) for physically connecting the battery to the power tool and/or to the charger and for electrically connecting the battery to the motor and/or to the charging circuit.

Typically, a battery having one configuration, such as the "slide-on" configuration, is not useable with a power tool having another configuration, such as the "tower" configuration, or vice versa. Prior art adapters have been described in US Patent Nos. 6,621,246 and 6,876,173, to allow users to utilize their "slide-on" battery packs with a power too that accepts "tower" battery packs.

However, these adapters tend to change the ergonomic characteristics of a power tool connected to the adapter and battery pack.

In addition, these adapters may allow a user to attempt to charge a "slide-on" lithium-ion battery pack with a charger that is only designed for charging nickel cadmium (NiCd) and/or nickel metal hydride (NiMH) battery packs.

In accordance with the present invention, an improved support power tool battery pack adapter is employed. The adapter is electrically connectable to a battery pack, with a first portion for attachment to a power tool, the first portion having a shroud and at least one upwardly-extending terminal pin at least partly surrounded by the shroud, and a second portion for slidably receiving the battery pack, at least one of the second portion and the battery pack having a groove for slidably receiving a rail disposed on the other of the second portion and the battery pack. The center of gravity of the combined battery pack and adapter is disposed at a distance (along the X axis) from the at least one terminal pin of between about 5.6 centimeters and about 26.3 centimeters, and at a distance (along the Y axis) from a top of the shroud of between about 81.0 centimeters and about 83.5 centimeters.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a top plan view of a first embodiment of a power tool battery pack adapter according to the invention.
FIG. 2 is a bottom plan view of the first embodiment.
FIG. 3 is a front elevational view of the first embodiment.
FIG. 4 is a rear elevational view of the first embodiment.
FIG. 5 is a right side view of the first embodiment.
FIG. 6 is a left side view of the first embodiment.
FIG. 7 is a perspective view of the first embodiment.
FIG. 8 is a right side view of the power tool battery pack adapter connected to an exemplary battery pack.
FIG. 9 illustrates a system that includes the power tool battery pack adapter of the invention.
FIG. 10 illustrates an exemplary battery pack that engages the power tool battery pack adapter of the invention.

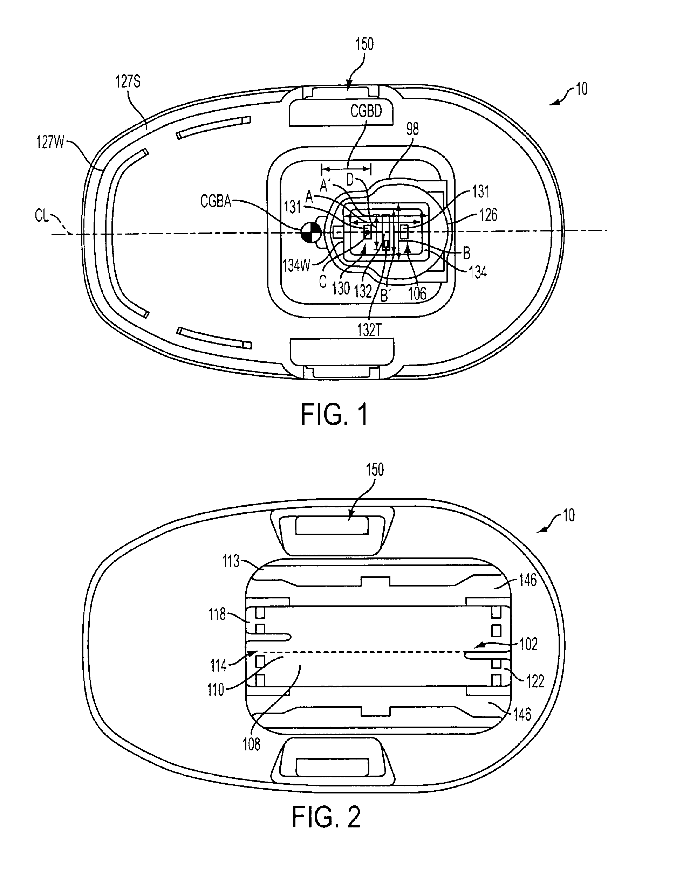

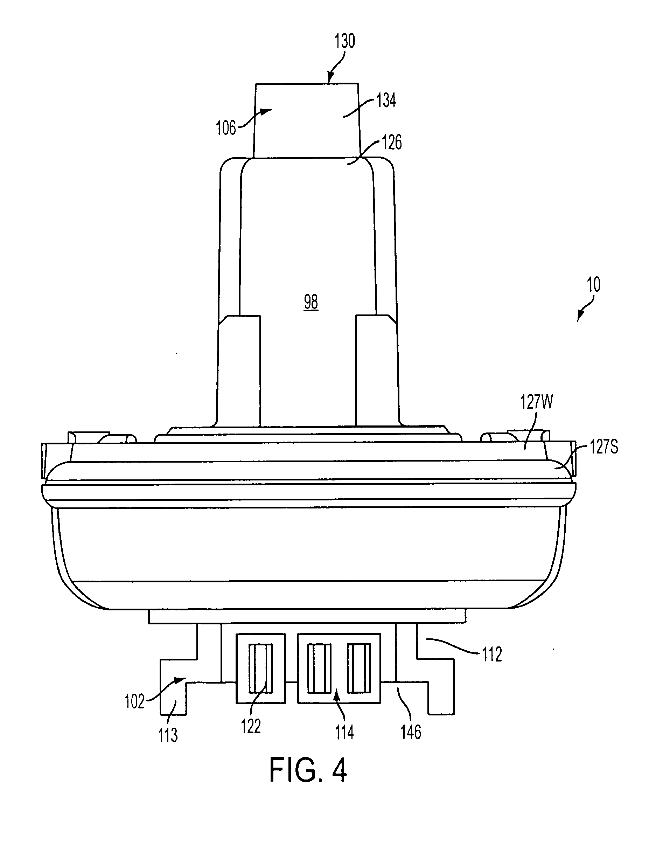

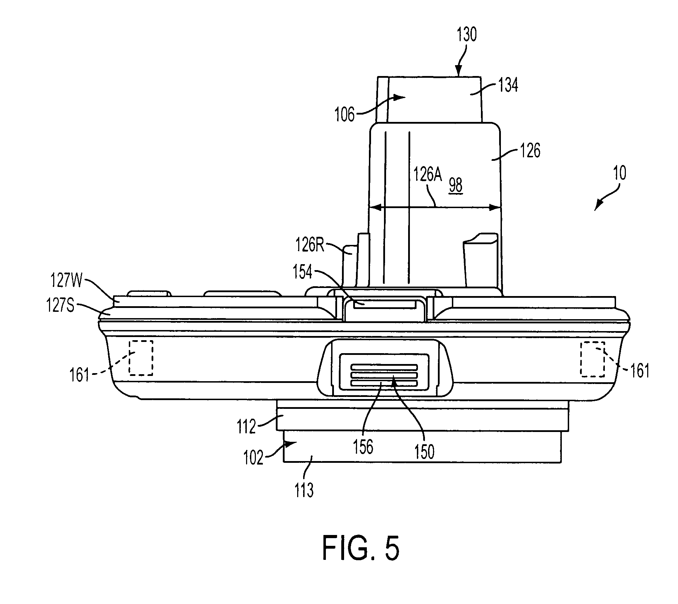

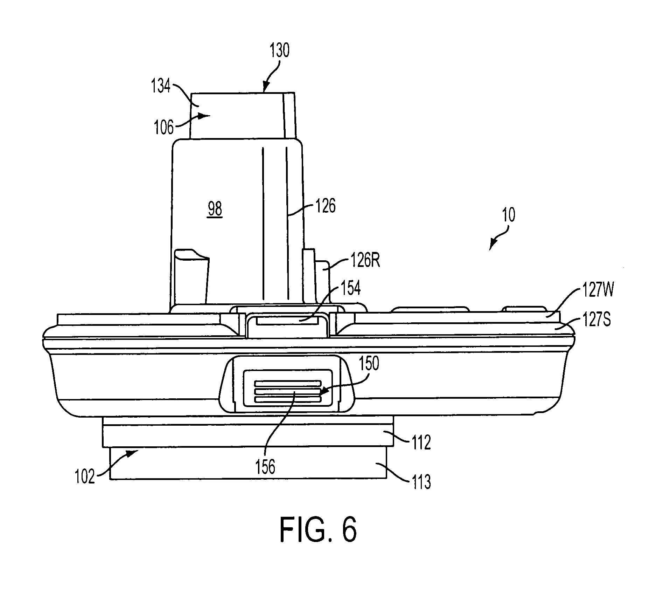

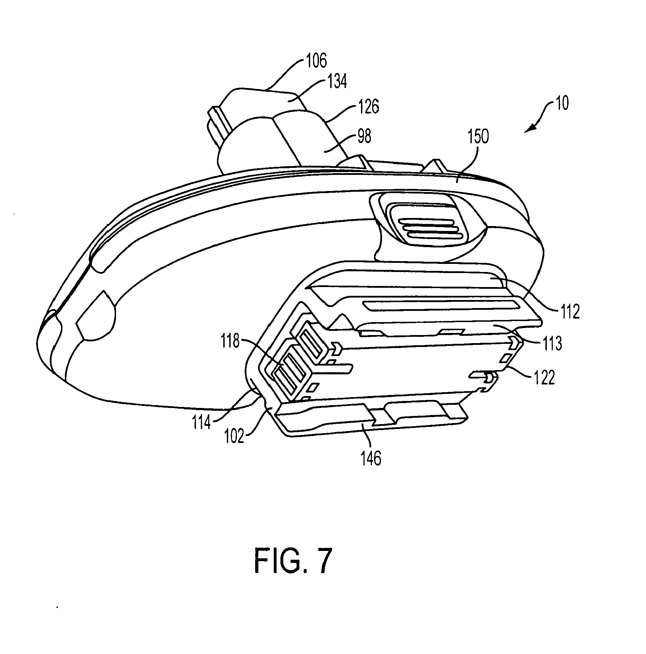

The invention is now described with reference to the accompanying figures, wherein like numerals designate like parts. An electrical combination including an adapter 10 for a power tool battery pack 14 is illustrated in FIGS. 1-9. The electrical combination also includes an electrical component, such as a power tool 18 and/or a battery charger 22. It should be understood that the electrical component may be any type of electrical component, such as, for example, a radio, audio device or flashlight, which is usable with a power tool battery pack.

The power tool 18 preferably includes a tool housing 26 and an electric motor 30 supported by the tool housing 26 and operable to drive a tool element (not shown). Persons skilled in the art are directed to US Patent Nos. 6,621,246 and 6,876,173, which are hereby fully incorporated by reference, for further information on the electrical connection between motor 30 and battery pack 14, as well as other matters discussed below. The tool housing 26 may also include a handle portion 38.

The power tool 18 preferably includes a connection configuration 42 for connecting the power tool 18 to a battery pack. For example, the connection configuration 42 of the power tool 18 may be a "tower" configuration for receiving a "tower" battery pack. Accordingly, a portion of the tool housing 26, such as the handle portion 38, defines an opening for receiving the "tower" battery pack, which is inserted along an axis substantially parallel to the longitudinal axis of the handle portion 38.

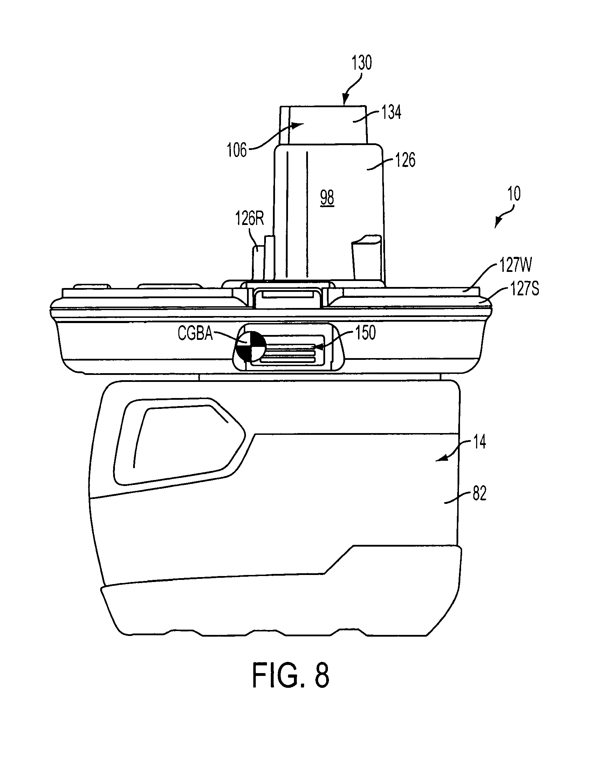

As shown in FIGS. 8-9, the battery pack 14 includes preferably a battery housing 82 supporting one or more rechargeable battery cells (not shown). The battery pack 14 may have a connection configuration 86 which is different than the connection configuration of the power tool 18. In the illustrated construction, the connection configuration 86 of battery pack 14 is a "slide-on" connection configuration. In the "slide-on" connection configuration, the battery housing 82 preferably includes a connecting portion 90 having grooves 92 and projections 93, and a battery terminal assembly 94 is supported on the connecting portion 90. The battery terminal assembly 94 may be electrically connected to the rechargeable battery cell(s) and is connectable, with the adapter 10, to the motor 30 to supply power to the motor 30.

As shown in FIGS. 1-10, the adapter 10 is preferably connectable between the "slide-on" battery pack 14 and the "tower" power tool 18. The adapter 10 may include an adapter housing 98 providing a first connecting portion 102, for connecting the adapter 10 to the battery pack 14, and a second connecting portion 106, for connecting the adapter 10 to the power tool 18 and/or to the battery charger 22.

In the illustrated construction, the first connecting portion 102 preferably provides a "slide-on" connection configuration similar to a "slide-on" power tool or a "slide-on" charger 22. The first connecting portion 102 may include a support portion 108 defining a battery attachment axis 110. The support portion 108 preferably includes axially-extending grooves 112 and projections 113.

The first connecting portion 102 may also include a first adapter terminal assembly 114 which is electrically connectable to the battery terminal assembly 94. In the illustrated construction, the "slide-on" battery 14 is preferably slidably connectable to the support portion 108 in a first direction along the axis 110. Persons skilled in the art will recognize that battery terminal assembly 94 may include male and/or female terminals, which engage correspondingly female and/or male terminals in first adapter terminal assembly 114.

Battery 14 may be selectively connectable to the adapter 10 to have a first orientation (shown in FIG. 8) relative to the adapter 10 and in a second direction along the axis 110 to have a second orientation (reversed from the position shown in FIG. 8) relative to the adapter 10. To accommodate the first and second orientations of the battery 14 relative to the adapter 10, the first adapter terminal assembly 114 may includes a forward (for the purposes of description) first adapter terminal assembly 118, which is electrically connectable to the battery terminal assembly 94 when the battery 14 is in the first orientation, and a rearward (for the purposes of description) first adapter terminal assembly 122, which is electrically connectable to the battery terminal assembly 94 when the battery 14 is in the second orientation.

As the battery 14 is connected to the first connecting portion 102, the grooves 92 and projections 93 on the support portion 90 of the battery 14 preferably interengage with the grooves 112 and the projections 113 on the support portion 108 of the adapter 10. As the battery 14 is slid onto the support portion 108, the first adapter terminal assembly 114 is electrically connected to the battery terminal assembly 94.

In the illustrated construction, the second connecting portion 106 provides a "tower" connection configuration similar to a "tower" battery pack. Preferably second connecting portion 106 is substantially disposed along the center line CL of adapter 10.

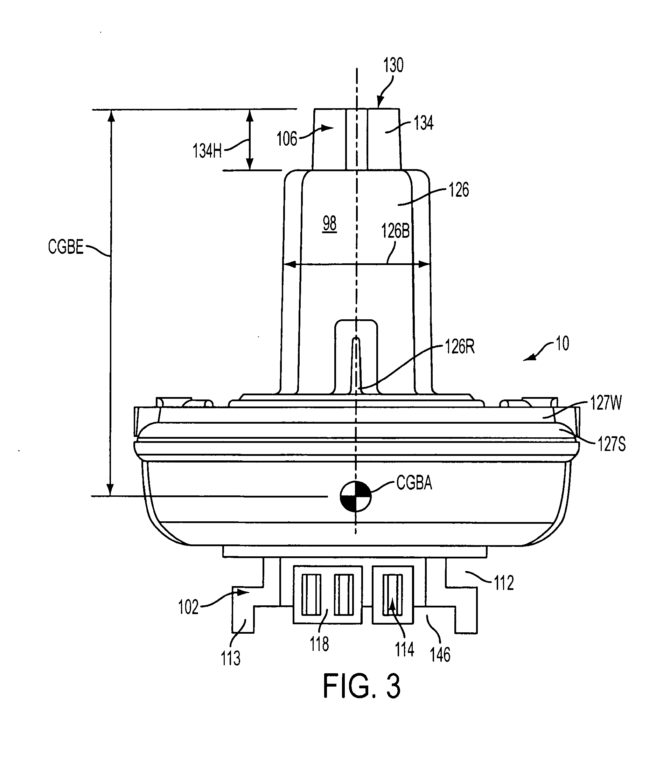

The second connecting portion 106 preferably includes a "tower" or insertion portion 126 to connect the adapter 10 to the "tower" power tool 18. The insertion portion 126 may have a width 126A along center line CL of about 3.4 centimeters, and a width 126B along a line substantially perpendicular to center line CL of about 2.8 centimeters to about 3.1 centimeters. Preferably, the width 126B varies between about 2.8 centimeters to about 3.0 centimeters, as shown in FIG. 3.

The second connecting portion 106 also includes a second adapter terminal assembly 130, which is electrically connectable to the electrical component terminal assembly. Second adapter terminal assembly 130 may include at last two terminal pins 131 extending substantially upwardly from insertion portion 126, in an arrangement similar to the one shown in US Patent No. 5,144,217, which is fully incorporated herein by reference. Terminal pins 131 preferably conduct the electricity to power motor 30, when electrically connected. Preferably, pins 131 has a width C of about 2 millimeters.

An insulating wall 132 may be disposed between terminals pins 131. Preferably wall 132 is taller than terminal pins 131. Wall 132 is substantially parallel to terminal pins 131. Wall 132 preferably has a length D of about 9 millimeters.

Wall 132 may have a terminal 132T. The function of terminal 132T is explained in US Patent No. 6,075,341, which is fully incorporated herein by reference.

Terminal pins 131 and wall 132 are surrounded by a shroud 134. Wall 132 may substantially fill the transverse width of the shroud 134. Shroud 134 is substantially rectangular. Shroud 134 may have a height 134H of about 1.2 centimeters. Shroud 134 is preferably constituted by a wall 134W, which defines an area containing the terminal pins 131 and wall 132. Such area preferably has an outer length A and an inner length A' of about 2.4 centimeters and about 2.0 centimeters, respectively. Such area preferably has an outer width B and an inner width B' of about 1.7 centimeters and about 1.3 centimeters, respectively.

Preferably, insertion portion 126 is designed so as to contact a guide component (not shown) in handle portion 38 as adapter 10 is inserted therein. For further information on this and other guide components, persons skilled in the art are directed to US Patent No. 6,551,123, which is fully incorporated herein by reference.

A second guiding means for finely guiding terminal pins 131 into contact with motor 30 and/or switch 31 would include the shroud 134, which contacts at least one vertical wall (not shown) protruding from switch 31 and surrounding the terminal connectors (not shown) which contact terminal pins 131.

Adapter 10 may have disposed below insertion portion 16 a wall 127W and/or shoulder 127S which contact the portion of the tool housing 26, such as the handle portion 38, that defines the opening for receiving the "tower" battery pack. Preferably such portion is the bottom portion 38B.

Battery pack 14 may also include a first locking assembly 138 for locking the battery pack 14 to the adapter 10. The first locking assembly 138 preferably includes a first locking member or moveable projection 142 supported on the battery pack 14 and a second locking member or recess 146 defined by the support portion 108. The moveable projection 142 is preferably engageable in the recess 146 to lock the battery 14 to the adapter 10.

The first locking assembly 138 may also include an actuator 144 for moving the projection 142 into and out of engagement with the recess 146. A spring (not shown) preferably biases the projection 142 and the actuator 144 to a position in which the projection 142 engages the recess 146. It should be understood that, in other constructions (not shown), the locking members 142 and 146 may be reversed and supported on the adapter 10 and the battery 14, respectively.

Adapter 10 may have a second locking assembly 150 for locking the adapter 10 to the power tool 18. The second locking assembly 150 preferably includes a first locking member or moveable projection 154 supported on the adapter 10 adjacent the support portion 108 and a recess (not shown) defined by the handle portion 38 of the power tool 18. An actuator 156 may move the projection 154 into and out of engagement with the recess. A spring (not shown) preferably biases the projection 154 and/or the actuator 156 to a position in which the projection 154 engages the recess. It should also be understood that, in other constructions (not shown), the projection 154 and the recess may be reversed and supported on the handle portion 38 and the adapter 10, respectively.

Persons skilled in the art should recognize that the force of the spring is preferably selected so that a user can move projection 154 out of engagement with the recess. However, such persons skilled in the art should also recognize that the force of the spring may be selected so that a user cannot move projection 154 out of engagement with the recess after adapter 10 has been inserted into handle portion 38, i.e., after projection 154 has engaged the recess. Alternatively, other locking means, such as a ratchet, etc., may be provided to create a non-separable junction between adapter 10 and power tool 18.

To use the "slide-on" battery pack 14 with the "tower" power tool 18, the adapter 10 is preferably connected between the battery pack 14 and the power tool 18. The insertion portion 126 of the adapter 10 may be inserted into the handle portion 38 so that the adapter 10 is connected to the handle portion 38 and so that the second adapter terminal assembly 130 is electrically connected with the motor 30 and/or switch 31.

The battery pack 14 is preferably then connected to the adapter 10. The battery pack 14 is preferably slid along the axis 110 so that the connecting portion 90 is connected to the support portion 108. The grooves 92 and 112 and the projections 93 and 113 are inter-engaged to connect the battery pack 14 to the adapter 10. When the battery pack 14 has been slid to its furthest extent on the support portion 108, the actuator 144 is released so that the projection 142 engages the recess 146 to lock the battery pack 14 to the adapter 10. As the battery pack 14 is slid onto the support portion 108, the first adapter terminal assembly 114 is electrically connected to the battery terminal assembly 94.

Preferably adapter 10 and/or battery pack 14 will have two opposite inwardly extending rails 143 defining opposite grooves 92. Preferably rails 143 define a gap with a width 143W between about 4.0 centimeters and about 5.5 centimeters. Preferably width 143W is about 4.0 centimeters. In addition, the distance 92W between grooves 92 is preferably between about 4.8 centimeters and about 6.2 centimeters. Preferably distance 92W is about 4.8 centimeters.

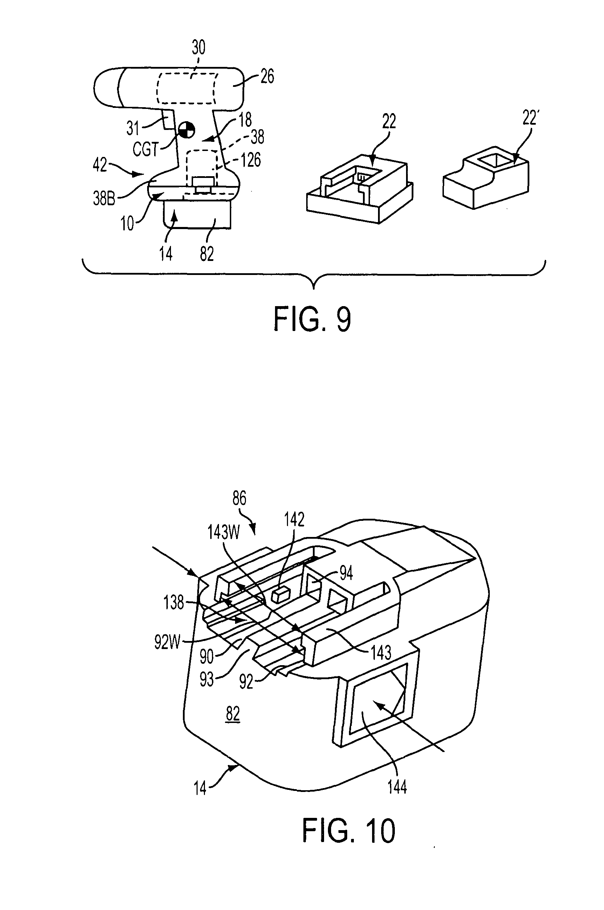

Persons skilled in the art will recognize that, while rails 143 and grooves 92 are shown as part of battery pack 14 in FIG. 10, rails 143 and grooves 92 may be disposed on adapter 10 and more specifically in first connecting portion 102. Preferably, the ranges for width 143W and distance 92W are substantially applicable in such arrangement.

As shown in FIG. 8, the battery pack 14 is in the first orientation relative to the adapter 10 and relative to the power tool 18. In this orientation, the forward first adapter terminal assembly 118 is electrically connected with the battery terminal assembly 94. Once the battery pack 14 is connected to the adapter 10 and the adapter 10 is connected to the power tool 18, the adapter electrical circuit connects the battery 14 to the motor 30. The power tool 18 may then be operated under the power of the battery 14.

In the reverse position from the position shown in FIG. 8, the battery pack 14 may be connected to the adapter 10 in the second orientation. In the second orientation, the rearward first adapter terminal assembly 122 is electrically connected to the battery terminal assembly 94.

To remove the battery pack 14, the actuator 144 is depressed so that the projection 142 is moved out of the recess 146. The battery pack 14 is then slid along the axis 110 so that the connecting portion 90 is disengaged from the support portion 108. To remove the adapter 10 from the power tool 18, the actuator 156 is depressed so that the projection 154 moves out of engagement with the recess. The adapter 10 is then moved outwardly so that the tower portion 126 is removed from the handle portion 38.

In order to maintain the ergonomic balance of a power tool 10, such as impact wrench, impact driver, hammer or drill 10, it is preferable to design such power tool 10 so that the center of gravity CGT of the combined power tool 10, adapter 10 and battery pack 14 is disposed within handle portion 38.

One aspect of achieving such center of gravity CGT is designing adapter 10 so that the center of gravity GCBA of the combined adapter 10 and battery pack 14 is substantially disposed along center line CL. The center of gravity GCBA is preferably at a distance CGBD (along the X axis) from the forwardmost terminal pin 131 of between about 5.6 centimeters and about 26.3 centimeters. Preferably, the center of gravity GCBA is at a distance CGBD from the forwardmost terminal pin 131 of about 18 centimeters. The center of gravity GCBA is preferably at a distance CGBE (along the Y axis) from the top of shroud 134 of between about 81.0 centimeters and about 83.5 centimeters.

Persons skilled in the art will know how to arrange elements in adapter 10 and/or battery pack 14 to achieve such center of gravity GCBA. One way to achieve such result is by adding weights 161 to the adapter 10 and/or battery pack 14.

Persons skilled in the art will recognize that adapter 10 preferably has a volume between about 49 cubic centimeters and about 295 cubic centimeters (not including first connecting portion 102). Preferably, second connecting portion 106 and/or insertion portion 126 has a volume of about 49 cubic centimeters.

Persons skilled in the art will recognize that adapter 10 may have a protrusion or rib, such as rib 126R protruding from insertion portion 126. Persons skilled in the art will also know how to shape such rib 126R so that adapter 10 may engage a power tool 18, but not engage a charger 22' that accepts "tower" battery packs. Persons skilled in the art will recognize that the user will be forced to remove battery pack 14 from adapter 10 and to insert such battery pack 14 into a charger 22 designed for "slide-on" battery packs.

Such result is especially advantageous as it prevents users from effectively inserting battery pack 14 having a first type of cell chemistry, e.g, lithium-ion, into a charger 22' that was designed for charging battery packs with a second type of cell chemistry, e.g., NiCd and/or NiMH, but that may not have been designed for charging lithium-ion cells

Persons skilled in the art may recognize other additions or alternatives to the means disclosed herein. However, all these additions and/or alterations are considered to be equivalents of the present invention.

## Claims

1. An adapter electrically connectable to a battery pack, the adapter comprising:
a first portion for attachment to a power tool, the first portion having a shroud and at least one upwardly-extending terminal pin at least partly surrounded by the shroud; and
a second portion for slidably receiving the battery pack, at least one of the second portion and the battery pack having a groove for slidably receiving a rail disposed on the other of the second portion and the battery pack;
wherein a center of gravity of the combined battery pack and adapter is disposed at a distance (along the X axis) from the at least one terminal pin of between about 5.6 centimeters and about 26.3 centimeters, and at a distance (along the Y axis) from a top of the shroud of between about 81.0 centimeters and about 83.5 centimeters.

2. The adapter of Claim 1, wherein the center of gravity is disposed at a distance (along the X axis) from the at least one terminal pin terminal pin of about 18 centimeters.

3. The adapter of Claim 1, further comprising a locking assembly disposed between the first and second portions for attaching the adapter to the power tool.

4. The adapter of Claim 3, wherein the locking assembly comprises a movable projection for engaging a portion of the power tool, and an actuator connected to the movable projection.

5. The adapter of Claim 3, wherein the locking assembly permits releaseable attachment between the adapter and the power tool.

6. The adapter of Claim 1, wherein the adapter (not including second portion) has a volume between about 49 cubic centimeters and about 295 cubic centimeters.

7. The adapter of Claim 1, wherein the first portion has a volume of about 49 cubic centimeters.

8. The adapter of Claim 1, wherein the first portion has at least three surfaces contacted by the power tool.

9. The adapter of Claim 1, wherein the power tool contacts the shroud.

10. An adapter electrically connectable to a battery pack, the adapter comprising:
a first portion for attachment to a power tool, the first portion having a shroud and at least one upwardly-extending terminal pin at least partly surrounded by the shroud; and
a second portion for slidably receiving the battery pack, at least one of the second portion and the battery pack having a groove for slidably receiving a rail disposed on the other of the second portion and the battery pack;
wherein the first portion has a volume between about 49 cubic centimeters and about 295 cubic centimeters.

11. The adapter of Claim 10, wherein the first portion has a volume of about 49 cubic centimeters.

12. The adapter of Claim 10, wherein a center of gravity of the combined battery pack and adapter is disposed at a distance (along the X axis) from the at least one terminal pin of between about 5.6 centimeters and about 26.3 centimeters, and at a distance (along the Y axis) from a top of the shroud of between about 81.0 centimeters and about 83.5 centimeters.

13. The adapter of Claim 12, wherein the center of gravity is disposed at a distance (along the X axis) from the at least one terminal pin terminal pin of about 18 centimeters.

14. The adapter of Claim 10, further comprising a locking assembly disposed between the first and second portions for attaching the adapter to the power tool.

15. The adapter of Claim 14, wherein the locking assembly comprises a movable projection for engaging a portion of the power tool, and an actuator connected to the movable projection.

16. The adapter of Claim 12, wherein the locking assembly permits releaseable attachment between the adapter and the power tool.

17. The adapter of Claim 10, wherein the first portion has at least three surfaces contacted by the power tool.

18. The adapter of Claim 10, wherein the power tool contacts the shroud.

19. An electrical system comprising:
a slide-on battery pack;
an adapter electrically connectable to the slide-on battery pack and electrically connectable to a power tool, the power tool being electrically connectable to a tower battery pack;
a first charger electrically connectable to the slide-on battery pack, but not electrically connectable to the adapter; and
a second charger not electrically connectable to the slide-on battery pack and not electrically connectable to the adapter, but electrically connectable to the tower battery pack.

20. The electrical system of Claim 19, wherein the adapter has a protrusion that contacts the second charger, but not the power tool.
